# EUROPEAN PATENT SPECIFICATION

(11) **EP 4 464 474 B1**
(45) Date of publication and mention of the grant of the patent: **03.12.2025**
(21) Application number: 24173822.8
(22) Date of filing: 02.05.2024
(51) Int. Cl.: B25J 17/02

(54) **COMPLIANCE UNIT**
COMPLIANCE-EINHEIT
UNITÉ DE CONFORMITÉ

(30) Priority: 15.05.2023 JP 2023079931
(43) Date of publication of application: 20.11.2024
(73) Proprietor: SMC Corporation, Tokyo 104-0031 (JP)
(72) Inventor: SATO, Motohiro, Ibaraki, 300-2493 (JP)
(74) Representative: Keil & Schaafhausen Patentanwälte PartGmbB

(56) References cited:
- US-A- 4 820 114

## Description

### BACKGROUND OF THE INVENTION

### FIELD OF THE INVENTION

The present invention relates to a compliance unit.

### DESCRIPTION OF THE RELATED ART

For example, JP 2001-129784 A discloses a compliance unit including a base plate extending along an XY plane, a table unit, and a compliance mechanism. The table unit is provided to be movable with respect to the base plate along the XY plane. The compliance mechanism is interposed between the base plate and the table unit. The compliance mechanism includes a plate-shaped retainer that rollably supports a large number of steel balls. A coil spring for returning the compliance mechanism to the original position with respect to the base plate is attached to the retainer. As another example, US4820114A discloses a compliance unit for radial compliance, comprising an original position return mechanism configured to return the table unit to an original position with respect to the base plate by pressing the table unit.

### SUMMARY OF THE INVENTION

It is desirable to provide a more satisfactory compliance unit.

The present invention has the object of solving the aforementioned problem.

According to an aspect of the invention, there is provided a compliance unit comprising: a base plate extending along an XY plane; a table unit disposed movably with respect to the base plate along the XY plane; a compliance mechanism interposed between the base plate and the table unit so as to be movable in an X direction and a Y direction with respect to the base plate and the table unit; and an original position return mechanism configured to return the table unit and the compliance mechanism to an original position with respect to the base plate by pressing the table unit and the compliance mechanism from an outside toward an inside in a planar direction of the base plate.

According to the present invention, a more satisfactory compliance unit can be provided.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a perspective view of a compliance unit according to an embodiment of the present invention;
FIG. 2 is an exploded perspective view of the compliance unit;
FIG. 3 is a bottom view of the compliance unit;
FIG. 4 is a cross-sectional view taken along line IV-IV of FIG. 3;
FIG. 5 is a longitudinal cross-sectional view taken along line V-V of FIG. 4;
FIG. 6 is a longitudinal cross-sectional view taken along line VI-VI of FIG. 4;
FIG. 7 is a cross-sectional view taken along line VII-VII of FIG. 5;
FIG. 8 is a partially exploded perspective view of the compliance unit;
FIG. 9 is an explanatory view showing the compliance unit in an unlocked state; and
FIG. 10 is an explanatory view showing the compliance unit in the unlocked state.

### DETAILED DESCRIPTION OF THE INVENTION

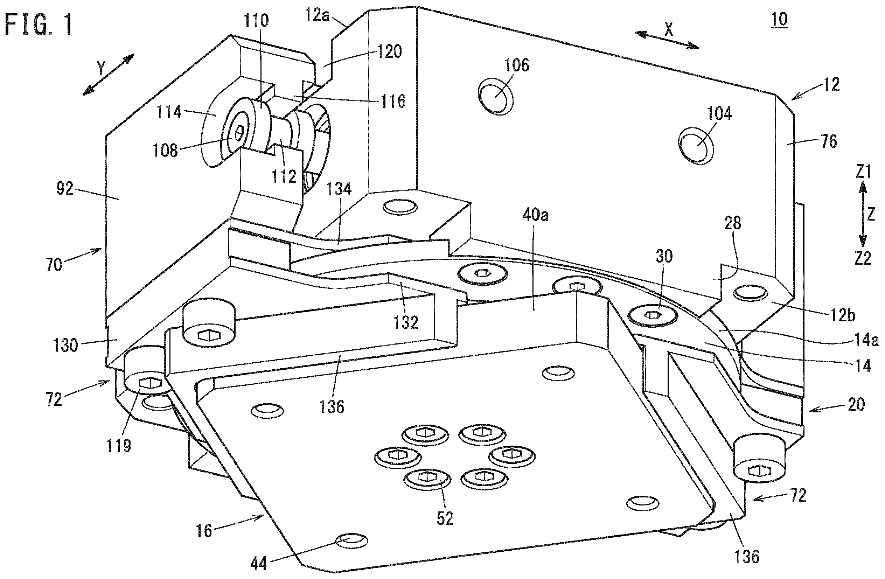

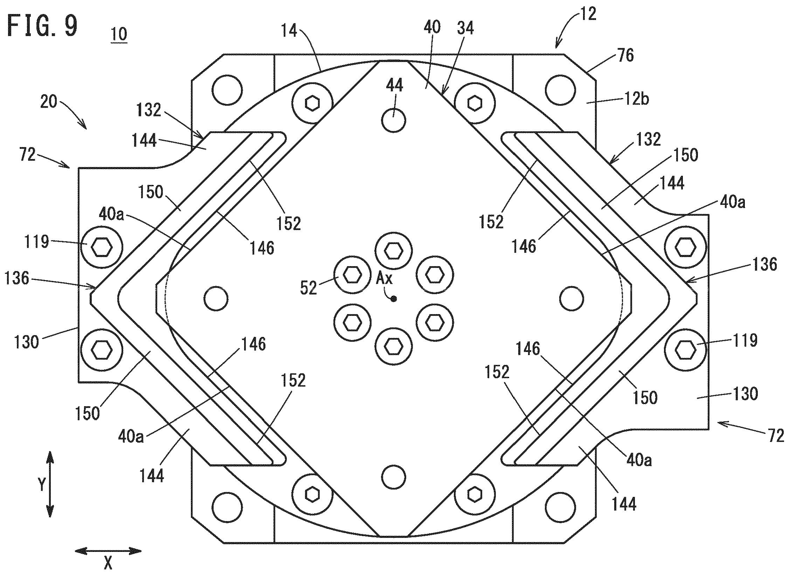

A compliance unit 10 according to an embodiment of the present invention will be described below with reference to the drawings. The compliance unit 10 according to the present embodiment is, for example, a device for correcting a positional deviation (misalignment) during assembly of a workpiece. Specifically, as shown in FIG. 1, in the compliance unit 10, for example, a robot hand (not shown) is connected to a body 12, and a chuck device (not shown) for gripping a workpiece is attached to a table unit 16. The table unit 16 is movable along an XY plane with respect to the body 12 in a state where the table unit 16 is not locked (is in an unlocked state) (see FIG. 9).

In the compliance unit 10 as described above, for example, even in a case where misalignment occurs during assembly of the workpiece in which the workpiece is inserted into a predetermined hole, the workpiece abuts against the inner surface of the hole, and thus the table unit 16 easily moves. Therefore, misalignment can be easily corrected. It should be noted that the application of the compliance unit 10 is not limited to the example in which the workpiece is inserted into the hole. Hereinafter, the configuration of the compliance unit 10 will be described in detail.

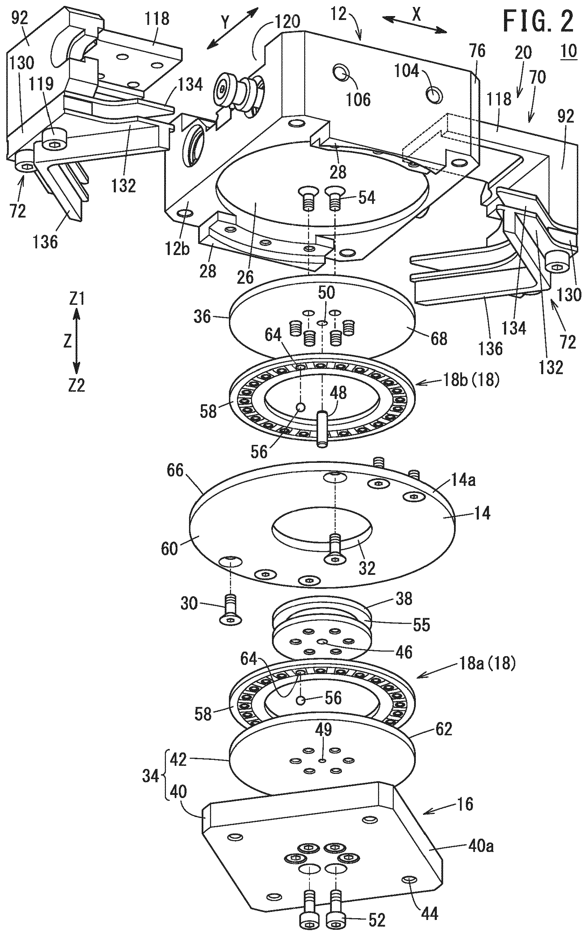

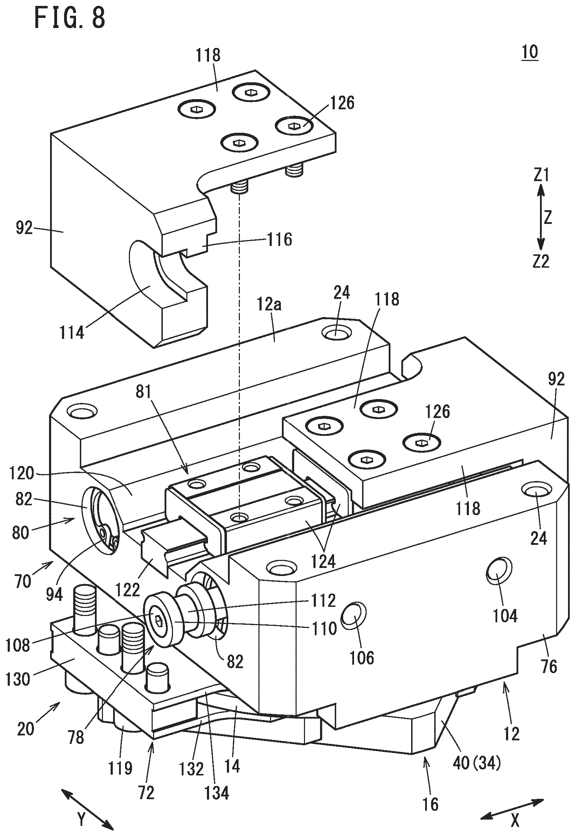

As shown in FIGS. 1 to 5, the compliance unit 10 includes the body 12, a base plate 14 extending along the XY plane, the table unit 16, a pair of compliance mechanisms 18, and an original position return mechanism 20. As shown in FIG. 2, the body 12 has a rectangular parallelepiped shape. The body 12 is made of, for example, a metal material. A plurality of holes 24 for connection to the robot hand (not shown) are formed in a first surface 12a of the body 12 that is oriented in a Z1 direction (see FIG. 8). The position, size, shape, number, and the like of the holes 24 can be appropriately set.

A circular recess 26 is formed in the central portion of a second surface 12b of the body 12 that is oriented in a Z2 direction. The body 12 is provided with a pair of base attachment portions 28 for attaching the base plate 14. The pair of base attachment portions 28 protrude toward the Z2 direction from both end portions in a Y direction of the second surface 12b of the body 12.

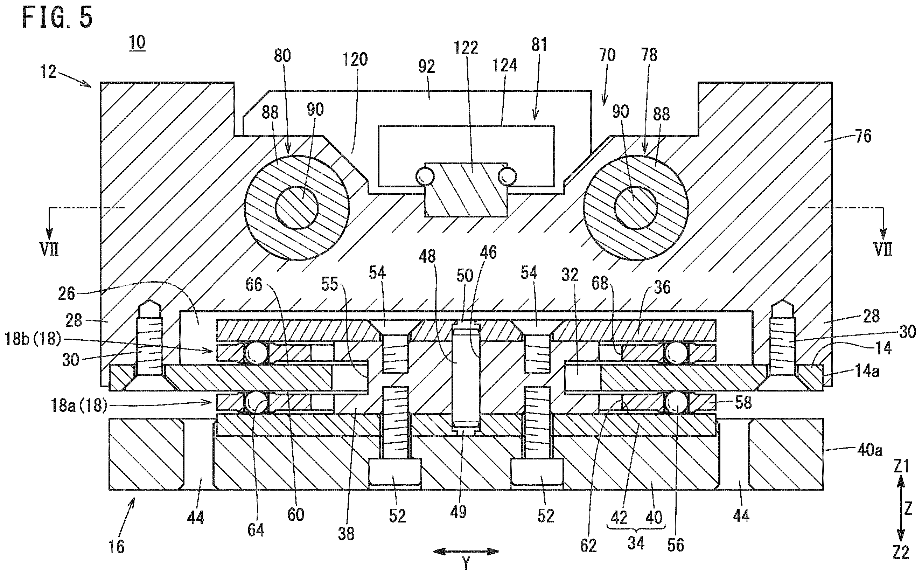

As shown in FIGS. 2 and 4 to 6, the base plate 14 is formed in an annular shape. The base plate 14 is made of, for example, a metal material. That is, the base plate 14 includes a circular outer peripheral surface 14a. The outer diameter of the base plate 14 is larger than the diameter of the recess 26 of the body 12. The base plate 14 is fixed to a base fixing portion by a plurality of screw members 30 (see FIG. 5). A circular through hole 32 is formed in the central portion of the base plate 14.

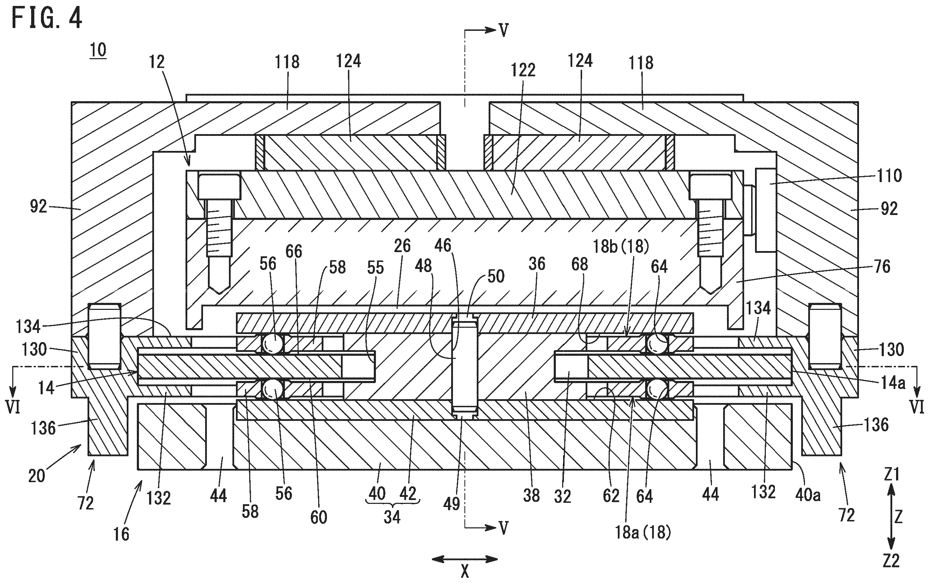

As shown in FIGS. 2, 4, and 5, the table unit 16 is disposed so as to be movable with respect to the base plate 14 along the XY plane. The table unit 16 includes a table main body 34, a holding plate 36, and a coupling portion 38. The table unit 16 is formed by integrally assembling the table main body 34, the holding plate 36, and the coupling portion 38 (see FIGS. 4 and 5).

The table main body 34 is positioned on the Z2 direction side of the base plate 14. The table main body 34 includes an attachment table 40 and a support plate 42. The attachment table 40 is made of, for example, a metal material. The attachment table 40 is formed in a square shape. The attachment table 40 is disposed such that two diagonal lines thereof extend along an X direction and the Y direction. The shape of the attachment table 40 may be a rectangular shape. Further, the shape of the attachment table 40 may be a circular shape or a polygonal shape (other than a quadrangular shape). The attachment table 40 includes a plurality of attachment holes 44 for attaching a chuck device (not shown) or the like (see FIGS. 1 and 2). The position, size, shape, number, and the like of the attachment holes 44 can be appropriately set. The attachment table 40 is thicker than the support plate 42.

The support plate 42 is made of, for example, a metal material. The support plate 42 is disposed on a surface of the attachment table 40 in the Z1 direction. The support plate 42 is formed in a circular shape. The diameter of the support plate 42 is smaller than the length of one side of the attachment table 40. In the present embodiment, the support plate 42 may be omitted.

The holding plate 36 is positioned on the Z1 direction side of the base plate 14. In other words, the holding plate 36 is positioned on the opposite side of the base plate 14 from the table main body 34 (is positioned on the Z1 direction side). The holding plate 36 is made of, for example, a metal material. The holding plate 36 is formed in a circular shape. The outer diameter of the holding plate 36 is smaller than the outer diameter of the circular recess 26 of the body 12. The holding plate 36 is at least partially inserted into the recess 26 (see FIGS. 4 and 5). The outer diameter of the holding plate 36 is the same as the outer diameter of the support plate 42. The outer diameter of the holding plate 36 may be larger or smaller than the outer diameter of the support plate 42.

The coupling portion 38 is formed in a columnar shape. The coupling portion 38 is made of, for example, a metal material. The outer diameter of the coupling portion 38 is smaller than the outer diameter of each of the support plate 42 and the holding plate 36. The coupling portion 38 is inserted into the through hole 32 of the base plate 14. The coupling portion 38 includes, in the central portion thereof, an insertion hole 46 extending from one end to the other end of the coupling portion 38. A coupling pin 48 is inserted through the insertion hole 46. One end portion (the end portion in the Z2 direction) of the coupling pin 48 is fitted into a hole 49 formed in the central portion of the support plate 42. The other end portion (the end portion in the Z1 direction) of the coupling pin 48 is fitted into a hole 50 formed in the central portion of the holding plate 36.

As shown in FIGS. 2 and 5, the coupling portion 38 couples the support plate 42 (the table main body 34) and the holding plate 36 to each other. The attachment table 40 and the support plate 42 are fixed to one end portion (the end portion in the Z2 direction) of the coupling portion 38 by a plurality of screw members 52. The support plate 42 is sandwiched and held between the attachment table 40 and the coupling portion 38. The holding plate 36 is fixed to the other end portion (the end portion in the Z1 direction) of the coupling portion 38 by a plurality of screw members 54.

As shown in FIGS. 2, 4, and 5, an annular groove 55 is formed in the outer peripheral surface of the coupling portion 38. The annular groove 55 is located at the central portion of the coupling portion 38 in the axial direction thereof. An inner peripheral end portion of the base plate 14 can be inserted into the annular groove 55 when the table unit 16 moves along the XY plane with respect to the base plate 14.

The compliance mechanisms 18 are interposed between the table unit 16 and the base plate 14 so as to be movable in the X direction and the Y direction with respect to the base plate 14 and the table unit 16. One of the compliance mechanisms 18 is interposed between the base plate 14 and the support plate 42 (the table main body 34). The other of the compliance mechanisms 18 is interposed between the base plate 14 and the holding plate 36. Hereinafter, the one compliance mechanism 18 is sometimes referred to as a "first compliance mechanism 18a", and the other compliance mechanism 18 is sometimes referred to as a "second compliance mechanism 18b".

The first compliance mechanism 18a includes a plurality of balls 56 and a plate-shaped retainer 58. The balls 56 are, for example, steel balls. The balls 56 come into contact with a flat surface 60 of the base plate 14 that is oriented in the Z2 direction, and a flat surface 62 of the support plate 42 that is oriented in the Z1 direction (see FIGS. 4 and 5). The flat surface 60 and the flat surface 62 are arranged parallel to each other.

The retainer 58 rollably supports the plurality of balls 56. The retainer 58 is formed in an annular shape. The outer diameter of the retainer 58 is the same as the outer diameter of each of the support plate 42 and the holding plate 36. The outer diameter of the retainer 58 may be larger or smaller than the outer diameter of each of the support plate 42 and the holding plate 36. The inner diameter of the retainer 58 is larger than the outer diameter of the coupling portion 38 and the inner diameter of the base plate 14.

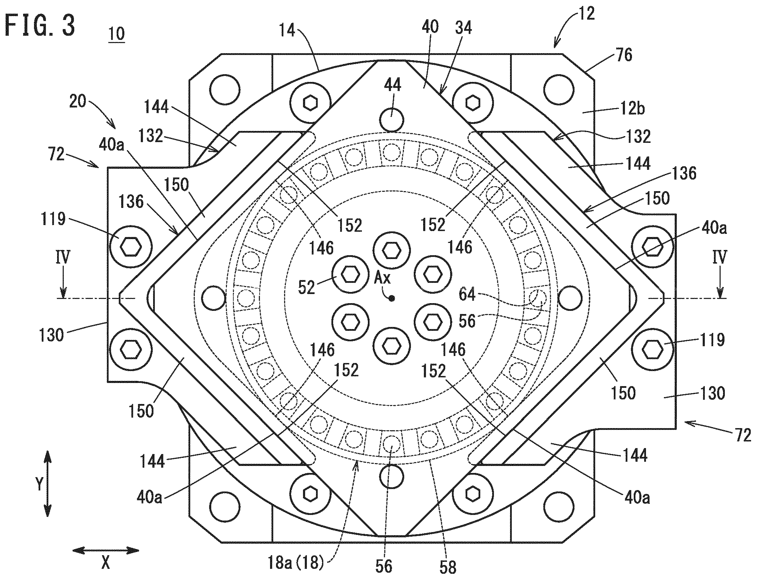

The retainer 58 includes a plurality of arrangement holes 64 in which the plurality of balls 56 are arranged. The plurality of arrangement holes 64 are arranged at equal intervals in the circumferential direction of the retainer 58 (see FIGS. 2 and 3). The position, number, and the like of the plurality of arrangement holes 64 can be appropriately set.

The second compliance mechanism 18b has the same configuration as the first compliance mechanism 18a. Therefore, the description of the detailed configuration of the second compliance mechanism 18b will be omitted. It should be noted that a plurality of balls 56 of the second compliance mechanism 18b come into contact with a flat surface 66 of the base plate 14 that is oriented in the Z1 direction, and a flat surface 68 of the holding plate 36 that is oriented in the Z2 direction (see FIGS. 4 and 5). The flat surface 66 and the flat surface 68 are arranged parallel to each other.

In the compliance unit 10 as described above, the table unit 16 is supported by the base plate 14 via the second compliance mechanism 18b in a state where the compliance unit 10 is disposed such that the Z2 direction is the gravity direction. In addition, in a state where the compliance unit 10 is disposed such that the Z1 direction is the gravity direction, the table unit 16 is supported by the base plate 14 via the first compliance mechanism 18a.

As shown in FIGS. 3, 4, and 6, the original position return mechanism 20 presses the base plate 14, the table unit 16, and the pair of compliance mechanisms 18 from the outside toward the inside in the planar direction of the base plate 14, thereby returning the table unit 16 and the pair of compliance mechanisms 18 to the original position with respect to the base plate 14. At the original position, the center of the table unit 16 and the center of the compliance mechanisms 18 are positioned on a central axis Ax of the base plate 14 (see FIG. 3). Further, the original position return mechanism 20 holds (locks) the table unit 16 and the compliance mechanisms 18 at the original position.

As shown in FIGS. 1 and 2, the original position return mechanism 20 includes a drive mechanism 70 and a pair of gripping portions 72. The drive mechanism 70 opens and closes the pair of gripping portions 72 (moves the pair of gripping portions 72 toward and away from each other). The drive mechanism 70 is provided at the body 12.

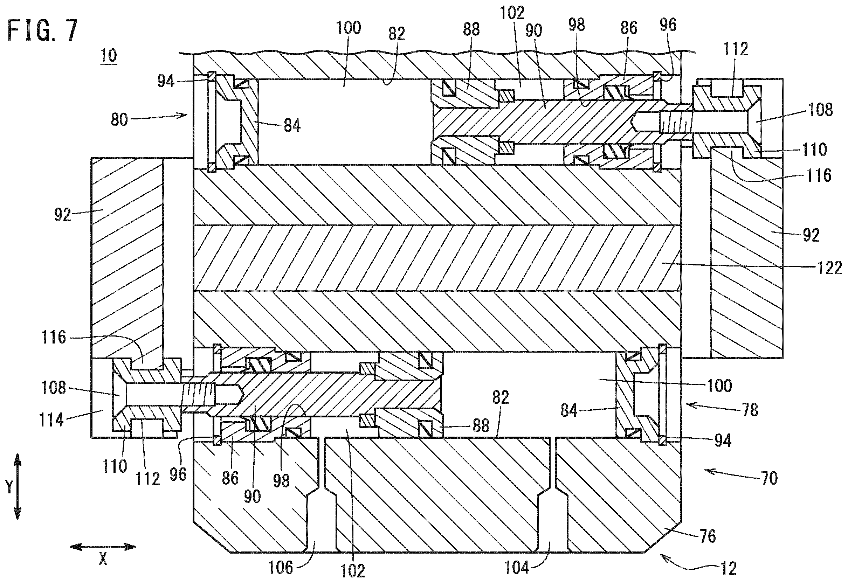

As shown in FIGS. 7 and 8, the drive mechanism 70 includes a housing 76, a first cylinder mechanism 78, a second cylinder mechanism 80, and a guide mechanism 81. The housing 76 is provided integrally with the body 12.

As shown in FIG. 7, the first cylinder mechanism 78 and the second cylinder mechanism 80 are arranged in parallel in the Y direction. The first cylinder mechanism 78 includes a cylinder hole 82, a head cover 84, a rod cover 86, a piston 88, a piston rod 90, and an end plate 92. The cylinder hole 82 penetrates the housing 76 in the X direction.

The head cover 84 airtightly closes one end portion of the cylinder hole 82. The head cover 84 is locked to the housing 76 by a snap ring 94. The rod cover 86 airtightly closes the other end portion of the cylinder hole 82. The rod cover 86 is locked to the housing 76 by a snap ring 96. A hole 98 through which the piston rod 90 is inserted is formed through the rod cover 86. The piston 88 is disposed between the head cover 84 and the rod cover 86. The piston 88 moves in a state of being in airtight contact with the inner peripheral surface of the cylinder hole 82.

A first chamber 100 is formed between the piston 88 and the head cover 84. A second chamber 102 is formed between the piston 88 and the rod cover 86. The housing 76 includes a first port 104 communicating with the first chamber 100, and a second port 106 communicating with the second chamber 102. A pressure fluid can be supplied to the first chamber 100 through the first port 104. The pressure fluid can be discharged from the first chamber 100 through the first port 104. The pressure fluid can be supplied to the second chamber 102 through the second port 106. The pressure fluid can be discharged from the second chamber 102 through the second port 106. The pressure fluid is, for example, compressed air, but is not limited thereto.

The piston rod 90 is inserted through the hole 98 of the rod cover 86. One end portion of the piston rod 90 is coupled to the piston 88. The other end portion of the piston rod 90 is positioned on the opposite side of the rod cover 86 from the piston 88. As shown in FIGS. 7 and 8, a connecting member 110 is fixed to the other end portion of the piston rod 90 by a screw member 108. The connecting member 110 is formed in an annular shape. The screw member 108 is inserted through the interior of the connecting member 110. An annular groove 112 is formed in the outer peripheral surface of the connecting member 110.

The end plate 92 is attached to the connecting member 110. The end plate 92 extends in a direction (along a YZ plane) orthogonal to the X direction. A connection hole 114 in which the connecting member 110 is disposed is formed through the end plate 92. A protrusion 116 to be inserted into the groove 112 of the connecting member 110 is provided on the inner surface of the connection hole 114. As shown in FIG. 8, an attachment plate 118 that protrudes toward the inside of the housing 76 is provided at an end portion of the end plate 92 in the Z1 direction. Further, the gripping portion 72 is fixed to the end plate 92 by a plurality of screw members 119 (see FIGS. 2 and 8).

As shown in FIG. 7, the second cylinder mechanism 80 has a configuration in which the first cylinder mechanism 78 is reversed in the X direction. Therefore, the description of the detailed configuration of the second cylinder mechanism 80 will be omitted. A first chamber 100 of the second cylinder mechanism 80 communicates with the first chamber 100 of the first cylinder mechanism 78 via a first communication passage (not shown) formed in the housing 76. A second chamber 102 of the second cylinder mechanism 80 communicates with the second chamber 102 of the first cylinder mechanism 78 via a second communication passage (not shown) formed in the housing 76. The end plate 92 of the first cylinder mechanism 78 and an end plate 92 of the second cylinder mechanism 80 are disposed on both sides of the housing 76 in the X direction.

As shown in FIG. 8, the guide mechanism 81 guides the pair of end plates 92 in the X direction. The guide mechanism 81 is disposed in a recess 120 formed in a surface of the housing 76 that is oriented in the Z1 direction. The recess 120 extends over the entire length of the housing 76 in the X direction. The guide mechanism 81 includes a guide rail 122 and a pair of sliders 124.

The guide rail 122 is provided on the bottom surface of the recess 120. The guide rail 122 extends over the entire length of the housing 76 in the X direction. The sliders 124 are attached to the guide rail 122 so as to be slidable in the X direction. The attachment plate 118 of the first cylinder mechanism 78 is fixed to one of the sliders 124 by a plurality of screw members 126. An attachment plate 118 of the second cylinder mechanism 80 is fixed to the other of the sliders 124 by a plurality of screw members 126.

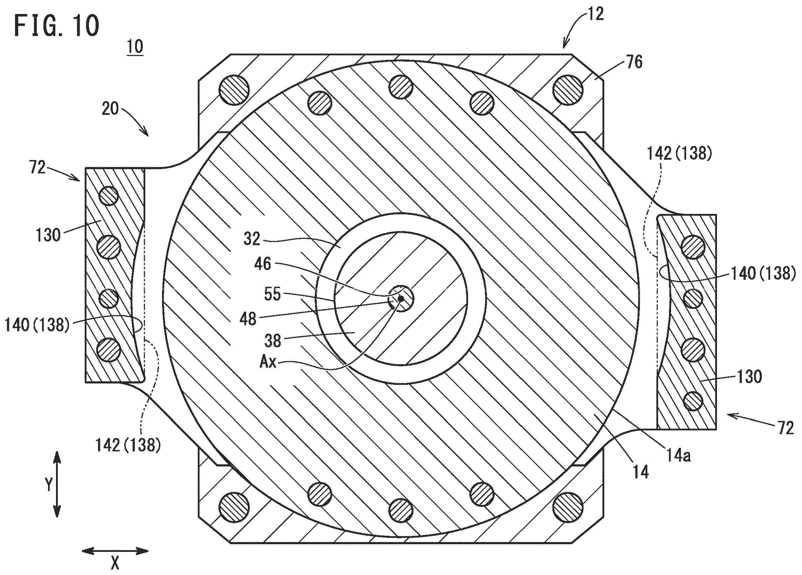

As shown in FIG. 7, in the drive mechanism 70, when the pressure fluid is supplied to the first port 104 in a state where the second port 106 is placed in communication with the outside air, the pressure fluid flows into the first chamber 100 of each of the first cylinder mechanism 78 and the second cylinder mechanism 80. Then, the piston 88 moves toward the second chamber 102, and the fluid (the pressure fluid) in the second chamber 102 is discharged from the second port 106. As a result, the pair of end plates 92 move in directions away from each other, and therefore, the pair of gripping portions 72 are opened (move away from each other) (see FIGS. 9 and 10).

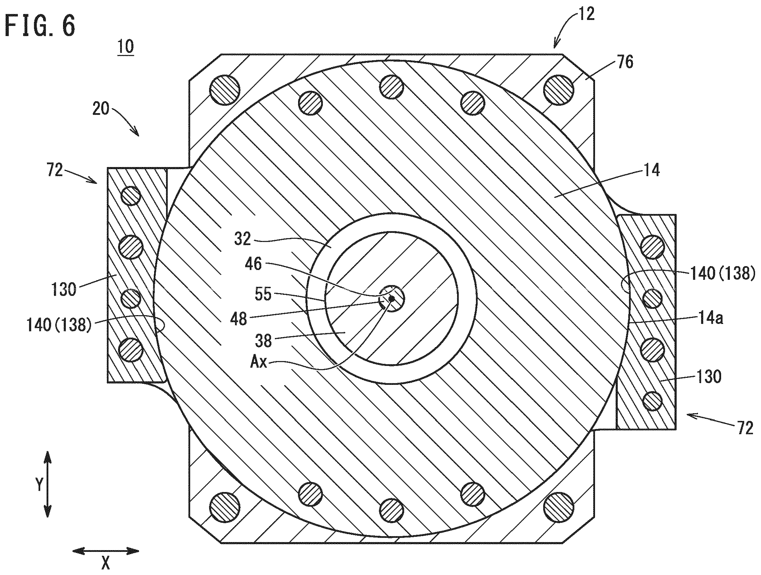

On the other hand, when the pressure fluid is supplied to the second port 106 in a state where the first port 104 is placed in communication with the outside air, the pressure fluid flows into the second chamber 102 of each of the first cylinder mechanism 78 and the second cylinder mechanism 80. Then, the piston 88 moves toward the first chamber 100, and the fluid (the pressure fluid) in the first chamber 100 is discharged from the first port 104. As a result, the pair of end plates 92 move in directions approaching each other, and therefore, the pair of gripping portions 72 are closed (move toward each other) (see FIGS. 3 and 6).

As shown in FIGS. 1 to 3, the pair of gripping portions 72 sandwich and hold the table unit 16, the pair of compliance mechanisms 18, and the base plate 14 in the X direction. The gripping portions 72 each include a gripping base 130, a first pressing portion 132, a second pressing portion 134, and a table pressing portion 136.

The gripping base 130 extends in the Y direction. The gripping base 130 is fixed to an end portion of the end plate 92 in the Z2 direction by a plurality of screw members 119. As shown in FIGS. 6 and 10, the gripping base 130 is provided with a base contact portion 138 that comes into contact with the outer peripheral surface 14a of the base plate 14 when the pair of gripping portions 72 are closed. The base contact portion 138 is a concave curved surface 140 curved along the outer peripheral surface 14a of the base plate 14. The radius of curvature of the concave curved surface 140 is larger than the radius of the base plate 14. It should be noted that, as shown by the imaginary line in FIG. 10, the base contact portion 138 may be a flat surface 142 instead of the concave curved surface 140.

As shown in FIGS. 1 to 3, the first pressing portions 132 press the first compliance mechanism 18a from the outside to the inside in the planar direction of the base plate 14. The first pressing portions 132 each protrude from an end portion of the gripping base 130 in the Z2 direction toward the first compliance mechanism 18a. As shown in FIG. 3, the first pressing portions 132 each include a pair of protruding portions 144 which protrude from the gripping base 130 toward the first compliance mechanism 18a so as to spread outward in the Y direction.

The protruding portions 144 are each provided with a retainer contact portion 146 that comes into contact with the outer peripheral surface of the retainer 58 when the pair of gripping portions 72 are closed. The retainer contact portion 146 is a flat surface. It should be noted that the retainer contact portion 146 may be a concave curved surface extending along the outer peripheral surface of the retainer 58. In this case, the radius of curvature of the curved surface is set to be larger than the radius of the retainer 58.

As shown in FIGS. 1 and 2, the second pressing portions 134 press the second compliance mechanism 18b from the outside to the inside in the planar direction of the base plate 14. The second pressing portions 134 each protrude from an end portion of the gripping base 130 in the Z1 direction toward the second compliance mechanism 18b. The second pressing portion 134 is configured in the same manner as the first pressing portion 132. Therefore, the description of the detailed configuration of the second pressing portion 134 will be omitted.

The table pressing portions 136 each protrude from the first pressing portion 132 in the Z2 direction. As shown in FIG. 3, the table pressing portions 136 each include a pair of holding projections 150 extending along the protruding portions 144 of the first pressing portion 132. The holding projections 150 are each provided with a table contact portion 152 extending in parallel to a side surface 40a of the attachment table 40. The pair of holding projections 150 are connected to each other. This can increase the rigidity of the table pressing portion 136 as compared with a case where the pair of holding projections 150 are separated from each other.

As shown in FIGS. 9 and 10, in the compliance unit 10, in a state where the pair of gripping portions 72 are opened (are away from each other), the gripping portions 72 are separated from the base plate 14, the table unit 16, and the pair of compliance mechanisms 18. Therefore, the table unit 16 becomes movable along the XY plane with respect to the base plate 14. As a result, for example, the positional deviation during assembly of the workpiece can be easily corrected. When the table unit 16 moves along the XY plane with respect to the base plate 14, the pair of compliance mechanisms 18 also move from the original position with respect to the base plate 14.

In the present embodiment, when the pair of gripping portions 72 are closed, the table contact portions 152 of the table pressing portions 136 come into contact with the side surfaces 40a of the attachment table 40, and thus the table pressing portions 136 press the attachment table 40 from the outside toward the inside in the planar direction of the base plate 14. In addition, the retainer contact portions 146 of the first pressing portions 132 come into contact with the outer peripheral surface of the retainer 58 of the first compliance mechanism 18a, and thus the first pressing portions 132 press the first compliance mechanism 18a from the outside toward the inside in the planar direction of the base plate 14. Further, the retainer contact portions 146 of the second pressing portions 134 come into contact with the outer peripheral surface of the retainer 58 of the second compliance mechanism 18b, and thus the second pressing portions 134 press the second compliance mechanism 18b from the outside toward the inside in the planar direction of the base plate 14.

As a result, the table unit 16, the first compliance mechanism 18a, and the second compliance mechanism 18b are returned to the original position with respect to the base plate 14. That is, the center of the table unit 16, the center of the first compliance mechanism 18a, and the center of the second compliance mechanism 18b are positioned on the central axis Ax of the base plate 14 (refer to FIG. 3).

Further, in the original position return state, the base contact portions 138 of the gripping bases 130 come into contact with the outer peripheral surface 14a of the base plate 14. In other words, the pair of gripping portions 72 sandwich and hold the base plate 14 (see FIG. 6). As a result, the pair of gripping portions 72 become incapable of moving with respect to the base plate 14. Further, in the original position return state, the pair of gripping portions 72 sandwich and hold the table unit 16, the first compliance mechanism 18a, and the second compliance mechanism 18b. As a result, the table unit 16, the first compliance mechanism 18a, and the second compliance mechanism 18b are held (locked) on the base plate 14 via the pair of gripping portions 72.

Incidentally, in a case where the compliance mechanisms 18 are not returned to the original position when the table unit 16 is returned to the original position, the center of the compliance mechanisms 18 may be shifted from the central axis Ax of the base plate 14 in a state where the table unit 16 is returned to the original position with respect to the base plate 14. In this case, the compliance mechanisms 18 may reach the stroke end during the movement of the table unit 16. If the table unit 16 is moved in this state, sliding resistance is generated between the compliance mechanisms 18 and the table unit 16, and thus the table unit 16 may not be able to be smoothly moved with respect to the base plate 14. In a configuration in which the compliance mechanisms 18 are returned to the original position by a spring, the repulsive force of the spring becomes resistance when the table unit 16 is moved, and therefore, the table unit 16 may not be able to be smoothly moved with respect to the base plate 14.

According to the present embodiment, the table unit 16 and the compliance mechanisms 18 can be returned to the original position with respect to the base plate 14 by pressing the table unit 16 and the compliance mechanisms 18 from the outside toward the inside in the planar direction of the base plate 14. This can prevent the compliance mechanisms 18 from reaching the stroke end during the movement of the table unit 16, and thus the table unit 16 can be smoothly moved with respect to the base plate 14. Further, since it is not necessary to provide, in each compliance mechanism 18, a spring for returning to the original position, the repulsive force of the spring does not act when the table unit 16 is moved. Therefore, the more satisfactory compliance unit 10 can be provided.

The compliance unit 10 is not limited to the above-described configuration. The drive mechanism 70 is not limited to having the configuration including the air cylinder. The drive mechanism 70 may be configured such that the piston rod 90 of the first cylinder mechanism 78 and a piston rod 90 of the second cylinder mechanism 80 are coupled to each other by a rack and pinion mechanism. In this case, the end plate 92 of the second cylinder mechanism 80 is interlocked with the movement of the piston 88 of the first cylinder mechanism 78.

Further, according to such a configuration, the rack and pinion mechanism can prevent the piston 88 of the first cylinder mechanism 78 and a piston 88 of the second cylinder mechanism 80 from moving in a state where the table unit 16 and the pair of compliance mechanisms 18 are held by the pair of gripping portions 72. Therefore, even if the base plate 14 is not sandwiched and held by the pair of gripping portions 72, the table unit 16 and the pair of compliance mechanisms 18 can be held at the original position with respect to the base plate 14.

The drive mechanism 70 may include an electric actuator. In this case as well, the electric actuator can prevent the pair of gripping portions 72 from moving with respect to the body 12 in a state where the table unit 16 and the pair of compliance mechanisms 18 are held by the pair of gripping portions 72. Therefore, even if the base plate 14 is not sandwiched and held by the pair of gripping portions 72, the table unit 16 and the pair of compliance mechanisms 18 can be held at the original position with respect to the base plate 14.

## Claims

1. A compliance unit (10) comprising:
a base plate (14) extending along an XY plane;
a table unit (16) disposed movably with respect to the base plate along the XY plane;
a compliance mechanism (18) interposed between the base plate and the table unit so as to be movable in an X direction and a Y direction with respect to the base plate and the table unit; and
an original position return mechanism (20) configured to return the table unit and the compliance mechanism to an original position with respect to the base plate by pressing the table unit and the compliance mechanism from an outside toward an inside in a planar direction of the base plate.

2. The compliance unit according to claim 1, wherein
the original position return mechanism holds the table unit and the compliance mechanism at the original position.

3. The compliance unit according to claim 2, further comprising a body (12) to which the base plate is attached, wherein
the original position return mechanism includes:
a pair of gripping portions (72) configured to sandwich and hold the table unit and the compliance mechanism; and
a drive mechanism (70) configured to open and close the pair of gripping portions, and
the drive mechanism is provided in the body.

4. The compliance unit according to claim 3, wherein
the original position return mechanism comes into contact with the base plate when the original position return mechanism has returned the table unit and the compliance mechanism to the original position.

5. The compliance unit according to any one of claims 1 to 4, wherein
the compliance mechanism includes:
a plurality of balls (56); and
a retainer (58) having a plate shape and configured to rollably support the plurality of balls, and
the original position return mechanism presses an outer peripheral surface of the retainer.

6. The compliance unit according to any one of claims 1 to 5, wherein
a through hole (32) is formed in a central portion of the base plate,
the table unit includes:
a table main body (34);
a holding plate (36) located on an opposite side of the base plate from the table main body; and
a coupling portion (38) configured to, in a state of being inserted through the through hole, couple the table main body and the holding plate to each other, and
the compliance mechanism is interposed at least one of between the base plate and the table main body, or between the base plate and the holding plate.

7. The compliance unit according to claim 6, wherein
the compliance mechanism is provided in plurality, and the compliance mechanisms are interposed both between the base plate and the table main body, and between the base plate and the holding plate.

8. The compliance unit according to claim 6 or 7, wherein
an annular groove (55) is formed in an outer peripheral surface of the coupling portion, and an inner peripheral end portion of the base plate is insertable into the annular groove when the table unit moves from the original position with respect to the base plate.

9. The compliance unit according to claim 3 or 4, wherein
the base plate includes an outer peripheral surface (14a) having a circular shape,
the original position return mechanism includes a base contact portion (138) configured to come into contact with the outer peripheral surface of the base plate,
the base contact portion is a concave curved surface (140) curved along the outer peripheral surface of the base plate, and
a radius of curvature of the concave curved surface is larger than a radius of the base plate.

10. The compliance unit according to claim 3 or 4, wherein
the base plate includes an outer peripheral surface having a circular shape,
the original position return mechanism includes a base contact portion configured to come into contact with the outer peripheral surface of the base plate, and
the base contact portion is a flat surface (142).

## Patentansprüche

1. Compliance-Einheit (10), umfassend:
eine Grundplatte (14), die sich entlang einer XY-Ebene erstreckt;
eine Tischeinheit (16), die in Bezug auf die Grundplatte entlang der XY-Ebene beweglich angeordnet ist;
einen Compliance-Mechanismus (18), der zwischen der Grundplatte und der Tischeinheit angeordnet ist, so dass er in X-Richtung und Y-Richtung in Bezug auf die Grundplatte und die Tischeinheit beweglich ist; und
einen Mechanismus (20) zum Zurückführen in die Ausgangsposition, der so konfiguriert ist, dass er die Tischeinheit und den Compliance-Mechanismus in eine Ausgangsposition in Bezug auf die Grundplatte zurückführt, indem er die Tischeinheit und den Compliance-Mechanismus von außen in Richtung Innenseite in einer ebenen Richtung der Grundplatte drückt.

2. Compliance-Einheit nach Anspruch 1, wobei der Mechanismus zum Zurückführen in die Ausgangsposition die Tischeinheit und den Compliance-Mechanismus in der Ausgangsposition hält.

3. Compliance-Einheit nach Anspruch 2, die ferner einen Körper (12) umfasst, an dem die Grundplatte befestigt ist, wobei
der Mechanismus zum Zurückbringen in die Ausgangsposition Folgendes umfasst:
ein Paar Greifabschnitte (72), die so konfiguriert sind, dass sie die Tischeinheit und den Compliance-Mechanismus einklemmen und halten; und
einen Antriebsmechanismus (70), der so konfiguriert ist, dass er das Paar Greifabschnitte öffnet und schließt, und
der Antriebsmechanismus in dem Körper vorgesehen ist.

4. Compliance-Einheit nach Anspruch 3, wobei der Mechanismus zum Zurückbringen in die Ausgangsposition mit der Grundplatte in Kontakt kommt, wenn der Mechanismus zum Zurückbringen in die Ausgangsposition die Tischeinheit und den Compliance-Mechanismus in die Ausgangsposition zurückgebracht hat.

5. Compliance-Einheit nach einem der Ansprüche 1 bis 4, wobei
der Compliance-Mechanismus umfasst:
eine Vielzahl von Kugeln (56); und
eine Halterung (58) mit einer Plattenform, die so konfiguriert ist, dass sie die Vielzahl von Kugeln rollbar stützt, und
der Mechanismus zum Zurückbringen in die Ausgangsposition auf eine Außenumfangsfläche der Halterung drückt.

6. Compliance-Einheit nach einem der Ansprüche 1 bis 5, wobei
ein Durchgangsloch (32) in einem mittleren Abschnitt der Grundplatte ausgebildet ist,
die Tischeinheit umfasst:
einen Tischhauptkörper (34);
eine Halteplatte (36), die sich auf einer dem Tischhauptkörper gegenüberliegenden Seite der Grundplatte befindet; und
einen Kupplungsabschnitt (38), der so konfiguriert ist, dass er in einem durch das Durchgangsloch eingeführten Zustand den Tischhauptkörper und die Halteplatte miteinander koppelt, und
der Nachgiebigkeitsmechanismus mindestens zwischen der Grundplatte und dem Tischhauptkörper oder zwischen der Grundplatte und der Halteplatte angeordnet ist.

7. Compliance-Einheit nach Anspruch 6, wobei der Nachgiebigkeitsmechanismus mehrfach vorgesehen ist und die Nachgiebigkeitsmechanismen sowohl zwischen der Grundplatte und dem Tischhauptkörper als auch zwischen der Grundplatte und der Halteplatte angeordnet sind.

8. Compliance-Einheit nach Anspruch 6 oder 7, wobei eine ringförmige Nut (55) in einer Außenumfangsfläche des Kupplungsabschnitts ausgebildet ist und ein innerer Umfangsendeabschnitt der Grundplatte in die ringförmige Nut eingeführt werden kann, wenn sich die Tischeinheit aus ihrer Ausgangsposition in Bezug auf die Grundplatte bewegt.

9. Compliance-Einheit nach Anspruch 3 oder 4, wobei
die Grundplatte eine Außenumfangsfläche (14a) mit einer kreisförmigen Form aufweist,
der Mechanismus zum Zurückbringen in die Ausgangsposition einen Grundkontaktabschnitt (138) umfasst, der so konfiguriert ist, dass er mit der Außenumfangsfläche der Grundplatte in Kontakt kommt,
der Grundkontaktabschnitt eine konkave gekrümmte Fläche (140) ist, die entlang der Außenumfangsfläche der Grundplatte gekrümmt ist, und
der Krümmungsradius der konkaven gekrümmten Fläche größer ist als der Radius der Grundplatte.

10. Compliance-Einheit gemäß Anspruch 3 oder 4, wobei
die Grundplatte eine Außenumfangsfläche mit kreisförmiger Gestalt aufweist,
der Mechanismus zum Zurückbringen in die Ausgangsposition einen Grundplattenkontaktabschnitt umfasst, der so konfiguriert ist, dass er mit der Außenumfangsfläche der Grundplatte in Kontakt kommt, und
der Grundplattenkontaktabschnitt eine flache Fläche (142) ist.

## Revendications

1. Unité de conformité (10) comprenant :
une plaque de base (14) s'étendant le long d'un plan XY ;
une unité de table (16) disposée de façon mobile par rapport à la plaque de base le long du plan XY ;
un mécanisme de conformité (18) interposé entre la plaque de base et l'unité de table de manière à être déplaçable dans une direction X et une direction Y par rapport à la plaque de base et à l'unité de table ; et
un mécanisme de renvoi à la position initiale (20) configuré pour renvoyer l'unité de table et le mécanisme de conformité vers une position initiale par rapport à la plaque de base en pressant l'unité de table et le mécanisme de conformité depuis un extérieur vers un intérieur dans une direction planaire de la plaque de base.

2. Unité de conformité selon la revendication 1, dans laquelle
le mécanisme de renvoi à la position initiale maintient l'unité de table et le mécanisme de conformité à la position initiale.

3. Unité de conformité selon la revendication 2, comprenant en outre un corps (12) auquel est fixée la plaque de base, dans laquelle
le mécanisme de renvoi à la position initiale inclut :
une paire de parties de préhension (72) configurées pour prendre en sandwich et maintenir l'unité de table et le mécanisme de conformité ; et
un mécanisme d'entraînement (70) configuré pour ouvrir et fermer la paire de parties de préhension, et
le mécanisme d'entraînement est disposé dans le corps.

4. Unité de conformité selon la revendication 3, dans laquelle
le mécanisme de renvoi à la position initiale vient en contact avec la plaque de base lorsque le mécanisme de renvoi à la position initiale a renvoyé l'unité de table et le mécanisme de conformité vers la position initiale.

5. Unité de conformité selon l'une quelconque des revendications 1 à 4, dans laquelle
le mécanisme de conformité inclut :
une pluralité de billes (56) ; et
un moyen de retenue (58) présentant une forme de plaque et configuré pour supporter la pluralité de billes de façon roulante, et
le mécanisme de renvoi à la position initiale presse une surface périphérique extérieure du moyen de retenue.

6. Unité de conformité selon l'une quelconque des revendications 1 à 5, dans laquelle
un trou traversant (32) est formé dans une partie centrale de la plaque de base,
l'unité de table inclut :
un corps principal de table (34) ;
une plaque de maintien (36) située sur un côté opposé de la plaque de base par rapport au corps principal de table ; et
une partie d'accouplement (38) configurée pour accoupler le corps principal de table et la plaque de maintien entre eux, dans un état inséré à travers le trou traversant, et
le mécanisme de conformité est interposé au moins entre la plaque de base et le corps principal de table ou entre la plaque de base et la plaque de maintien.

7. Unité de conformité selon la revendication 6, dans laquelle
il est prévu une pluralité de mécanismes de conformité, et les mécanismes de conformité sont interposés entre la plaque de base et le corps principal de table, et entre la plaque de base et la plaque de maintien.

8. Unité de conformité selon la revendication 6 ou 7, dans laquelle
une rainure annulaire (55) est formée dans une surface périphérique extérieure de la partie d'accouplement, et une partie d'extrémité périphérique intérieure de la plaque de base peut être insérée dans la rainure annulaire lorsque l'unité de table se déplace à partir de la position initiale par rapport à la plaque de base.

9. Unité de conformité selon la revendication 3 ou 4, dans laquelle
la plaque de base inclut une surface périphérique extérieure (14a) présentant une forme circulaire,
le mécanisme de renvoi à la position initiale inclut une partie de contact de base (138) configurée pour venir en contact avec la surface périphérique extérieure de la plaque de base,
la partie de contact de base est une surface incurvée concave (140) incurvée le long de la surface périphérique extérieure de la plaque de base, et
un rayon d'incurvation de la surface incurvée concave est supérieur à un rayon de la plaque de base.

10. Unité de conformité selon la revendication 3 ou 4, dans laquelle
la plaque de base inclut une surface périphérique extérieure présentant une forme circulaire,
le mécanisme de renvoi à la position initiale inclut une partie de contact de base configurée pour venir en contact avec la surface périphérique extérieure de la plaque de base, et
la partie de contact de base est une surface plate (142) .
